# Europäisches Patentamt

# European Patent Office

# Office européen des brevets

(19)

(11) Veröffentlichungsnummer: **0 054 863**
**A2**

(12)

# EUROPÄISCHE PATENTANMELDUNG

(21) Anmeldenummer: 81110340.7

(22) Anmeldetag: 11.12.81

(51) Int. Cl.³: **F 23 L 15/04, F 24 H 9/18**

(30) Priorität: 24.12.80 DE 3049163

(43) Veröffentlichungstag der Anmeldung: 30.06.82
Patentblatt 82/26

(84) Benannte Vertragsstaaten: AT BE CH FR GB IT LI LU NL SE

(71) Anmelder: **Kernforschungsanlage Jülich Gesellschaft mit beschränkter Haftung, Postfach 1913, D-5170 Jülich (DE)**
Anmelder: **Rosenthal Technik AG, Postfach 1508 Wittelsbacherstrasse 49, D-8672 Selb/Bayern (DE)**

(72) Erfinder: **Förster, Siegfried, Dr., Ottenfeld 1, D-5110 Alsdorf (DE)**
Erfinder: **Schindler, Stefan R., Dr., Häusellohweg 42, D-8672 Selb (DE)**
Erfinder: **Pohlmann, Hans-Jürgen, Dr., Häusellohweg 64, D-8672 Selb (DE)**

(54) **Stirnseitige Verbindung keramischer Komponenten einer Verbrennungs- und Heizeinrichtung.**

(57) Für eine Verbrennungs- und Heizeinrichtung, deren Komponenten zumindest ein Brennerkopf zur Zufuhr von Brennstoff und Verbrennungsluft zum Brennraum sowie ein dem Brennraum nachgeschalteter Rekuperator sind, der dem Wärmeaustausch zwischen im Brennraum erzeugtem Heizgas und einem aufzuheizenden Medium dient, besteht eine Verbindung der Komponenten, die an ihren stirnseitigen Mündungen schlitzförmig ausgebildete Strömungskanäle aufweisen, darin, dass jede Komponente (1, 2, 3) zumindest an einer ihrer Stirnseiten einen durch Verlängerung der äusseren Wand (13) der Komponente ausgebildeten Anschlussstutzen (12) zum Anschluss einer benachbarten Komponente (1, 2, 3) aufweist, der die Mündungen der Strömungskanäle (5, 6, 10, 11) überragt.

EP 0 054 863 A2

0054863

Kernforschungsanlage Jülich
Gesellschaft mit beschränkter Haftung

Stirnseitige Verbindung keramischer Komponenten
einer Verbrennungs- und Heizeinrichtung

Die Erfindung bezieht sich auf eine stirnseitige Verbindung keramischer Komponenten einer Verbrennungs- und Heizeinrichtung, deren Komponenten zumindest ein Brennerkopf zur Zufuhr von Brennstoff und Verbrennungsluft zum Brennraum sowie ein dem Brennraum nachgeschalteter Rekuperator für den Wärmeaustausch zwischen im Brennraum erzeugtem Heißgas und einem aufzuheizenden Medium sind, wobei Brenner und Rekuperator an ihren Stirnseiten Mündungen schlitzförmig ausgebildeter Strömungskanäle aufweisen.

Verbrennungs- und Heizeinrichtungen dieser Art sind sowohl für Industrieöfen als auch für Wärmeerzeuger kleinerer Einheit, für die Heizung von Wohnräumen oder Wohngebäuden oder die Aufbereitung von Warmwasser bestimmt. Dabei wird eine hohe Energierückgewinnung aus den im Brennraum erzeugten Heißgasen angestrebt. Dies ist insbesondere dann möglich, wenn das Heißgas in den Rekuperatoren unter die Taupunkttemperatur abgekühlt wird.

- 2 -

Hierzu werden keramische Verbrennungs- und Heiz-einrichtungen eingesetzt. Ein Heizgerät dieser Art, bei dem ein Brennerkopf mit Brennraum und Rekuperatoren in Strömungsrichtung des erzeugten Heißgases gesehen hintereinander geschaltete Komponenten einer Heizeinrichtung bilden, ist aus Technische Informationen der Kernforschungsanlage Jülich GmbH, "Keramische Bauelemente für Wärme- und Verfahrenstechnik", 1980, bekannt und wird in einer nicht vorveröffentlichten deutschen Patentanmeldung P 3o 14 245.1-16 beschrieben. Die Komponenten sind quaderförmig ausgebildet und weisen gleichgroße Querschnittsflächen auf. Je nach technischem Anwendungszweck werden entsprechend angepaßte Komponenten zu einer Einheit zusammengesetzt.

Aufgabe der Erfindung ist es, die Komponenten von keramischen Verbrennungs-und Heizeinrichtungen derart zu gestalten, daß Komponenten in einfachster Weise ohne Beeinträchtigung der Medienführung an den Anschlußstellen miteinander verbindbar sind.

Diese Aufgabe wird bei einer keramischen Verbrennungs- und Heizeinrichtung der eingangs erwähnten Art gemäß der Erfindung durch die im Patentanspruch 1 angegebenen Merkmale gelöst. Die Komponenten weisen Anschlußstutzen auf, die als Verlängerungen der äußeren Wände der Komponenten ausgebildet sind und die Mündungen der Strömungskanäle in der Weise überragen, daß beim Verbinden von Komponenten zwischen Ein- und Auslaßöffnungen der Strömungskanäle die Gasververteilung und Strömungsführung begünstigende Zwischenräume verbleiben. Die Komponenten werden an den Anschlußstutzen lösbar miteinander verbunden, beispielsweise mittels die Anschlußstutzen umspannenden, gasdichten Manschetten, so daß in vorteilhafter Weise gegebenenfalls schadhaft gewordene Komponenten ausgetauscht werden können.

An Brenner und Rekuperator sind in weiterer Ausgestaltung der Erfindung die Anschlußstutzen derart ausgebildet, daß beim Verbinden von Brenner und Rekuperator zugleich der Brennraum entsteht. Diese Ausbildung des Brennraums fördert bei Betrieb der Verbrennungs- und Heizeinrichtung die Verbrennung und die gewünschte Wärmeableitung über die Wände des Brennraums einerseits zum Brennerkopf hin, andererseits zum Rekuperator und erspart eine aufwendige Isolierung der Brennraumwände. Dies ist insbesondere von Bedeutung für Komponenten aus gut wärmeleitender Keramik, zum Beispiel aus Siliziumnitrit.

Die Erfindung wird anhand eines Ausführungsbeispiels, das in der Zeichnung schematisch wiedergegeben ist, näher erläutert. Es zeigen im einzelnen:

Figur 1, Längsschnitt einer Heizeinrichtung mit keramischem Brennerkopf sowie zwei hintereinander geschalteten keramischen Rekuperatoren, gemäß Schittlinie I/I nach Figur 2.

Figur 2, Querschnitt einer Heizeinrichtung nach

0054863

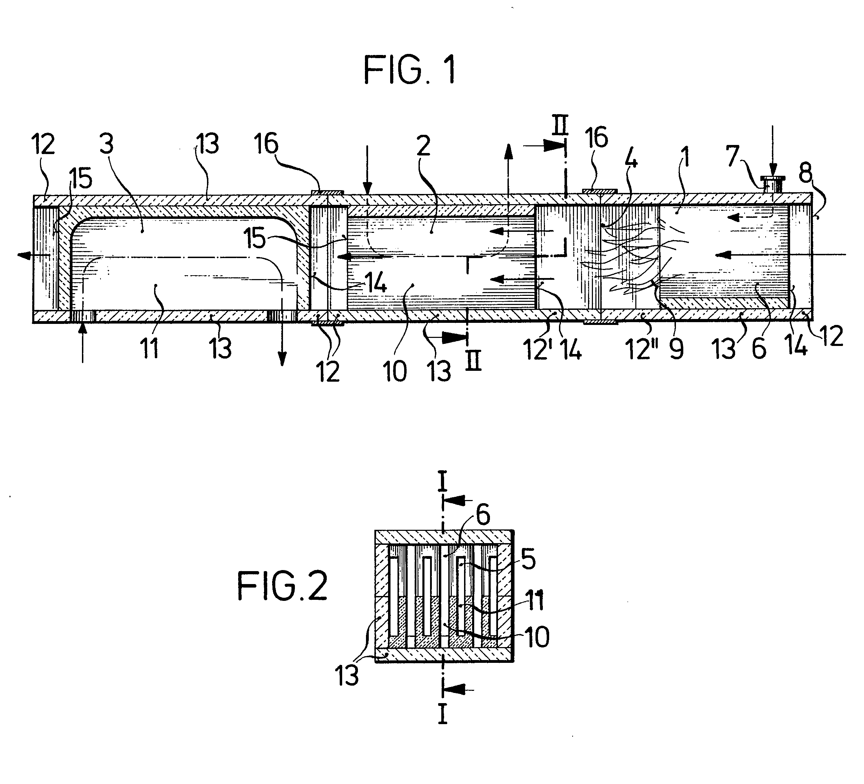

Figur 1 gemäß Schnittlinie II/II.

Die in der Zeichnung dargestellte Verbrennungs- und Heizeinrichtung weist als Komponenten einen keramischen Brennerkopf 1 mit zwei ebenfalls aus Keramik bestehenden Rekuperatoren 2,3 auf. Zwischen Brennerkopf 1 und Rekuperator 2 ist ein Brennraum 4 ausgebildet. Die Komponenten bestehen jeweils aus einem quaderförmigen keramischen Baustein und weisen gleichgroße Querschnitte auf. Im Brennerkopf 1 und in den Rekuperatoren 2,3 verlaufen eine Vielzahl parallel geführter Strömungskanäle mit schlitzförmigem Strömungsquerschnitt, wobei jeweils benachbarte Strömungskanäle von verschiedenen Medien durchströmt werden. Im Brennerkopf 1 sind nebeneinander Strömungskanäle 5 für Brennstoff und Strömungskanäle 6 für Verbrennungsluft angeordnet. Brennstoff und Verbrennungsluft werden dem Brennerkopf 1 über Anschlüsse 7 und 8 zugeführt. Die Strömungskanäle 5 und 6 münden stirnseitig am Brennermund 9 des Brennerkopfes 1 derart, daß Brennstoff und Verbrennungsluft auf der gesamten Brennermundfläche intensiv miteinander vermischt werden und im Brennraum 4 in einer kurzen Verbrennungszone verbrennen.

In den Rekuperatoren 2,3 strömt in Strömungskanälen 1o im Brennraum 4 erzeugtes Heißgas, in Strömungskanäle 11 ein in den Rekuperator 2,3 zu erwärmendes Heizmedium. Im Ausführungsbeispiel wird in den Rekuperatoren 2,3 Wasser erhitzt, das zur Raumheizung genutzt wird.

Brennerkopf 1 und Rekuperatoren 2,3 weisen zur Verbindung der einzelnen Komponenten an ihren Stirnseiten jeweils Anschlußstutzen 12 auf, die als Verlängerung von äußeren Wänden 13 der quaderförmigen Komponenten ausgebildet sind. Die Anschlußstutzen 12 überragen jeweils die Mündungen der Strömungskanäle am stirnseitigen Gaseinlaß 14 sowie am stirnseitigen Gasauslaß 15 der Komponenten um ein Vielfaches der Wandstärke der Anschlußstutzen. Der dabei entstehende Zwischenraum zwischen den Mündungen der Strömungskanäle sorgt für eine gleichmäßige Gasverteilung und Strömungsführung. Die Komponenten sind an den Anschlußstutzen 12 lösbar miteinander verbunden, im Ausführungsbeispiel mittels Manschetten 16, die die Anschlußstellen gasdicht umschließen. Falls eine der Komponenten während des Betriebs funktionsuntüchtig wird, ist nach Lösen der Manschetten 16 ein einfaches Auswechseln der Komponenten möglich.

Der Anschlußstutzen 12' des Brennerkopfes 1 und der Anschlußstutzen 12" des Rekuperators 2 sind derart ausgebildet, daß beim Verbinden von Brenner und Rekuperator der Brennraum 4 gebildet wird. Über die Anschlußstutzen 12' und 12" wird die auf die Wand des Brennraums übertragene Wärme unmittelbar zum Brennerkopf 1 und zum Rekuperator 2 abgeleitet. Dies fördert die Wärmeableitung der im Brennraum erzeugten Wärme, ohne daß eine gesonderte Isolation des Brennraums erforderlich ist.

Statt der Rekuperatoren 2,3 , die der Aufheizung von Wasser dienen, sind je nach technischer Anforderung auch andere Rekuperatoren verwendbar, beispielsweise Rekuperatorkomponenten zur Vorerhitzung von Verbrennungsluft. Auch lassen sich Rekuperatoren zur Vorerhitzung von Schadgas zwischenschalten, das im Brennraum verbrannt werden soll. Die Ausbildung der Komponenten gemäß der Erfindung ermöglicht eine vielfältige Kombination von Verbrennungs- und Heizeinrichtungen.

Kernforschungsanlage Jülich
Gesellschaft mit beschränkter Haftung

**0054863**

- 7 -

Patentansprüche

1. Stirnseitige Verbindung keramischer Komponenten einer Verbrennungs- und Heizeinrichtung deren Komponenten zumindest ein Brennerkopf zur Zufuhr von Brennstoff und Verbrennungsluft zum Brennraum sowie ein dem Brennraum nachgeschalteter Rekuperator für den Wärmeaustausch zwischen im Brennraum erzeugtem Heißgas und einem aufzuheizenden Medium sind, wobei Brenner und Rekuperator an ihren Stirnseiten Mündungen schlitzförmig ausgebildeter Strömungskanäle aufweisen, dadurch gekennzeichnet, daß jede Komponente (1,2,3) zumindest an einer ihrer Stirnseiten einen durch Verlängerung der äußeren Wand (13) der Komponente ausgebildeten Anschlußstutzen (12) zum Anschluß einer benachbarten Komponente (1,2,3) aufweist, der die Mündungen der Strömungskanäle (5,6,1o,11) überragt.

2. Keramische Verbrennungs- und Heizeinrichtung nach Anspruch 1, dadurch gekennzeichnet, daß Brennerkopf (1) und Rekuperator (2) miteinander durch Anschlußstutzen (12',12") verbindbar sind, die Wände des Brennraums (4) bilden.

FIG. 1

FIG.2

0054863